# DEMANDE DE BREVET EUROPEEN

(11) **EP 4 703 270 A1**
(43) Date de publication de la demande: **04.03.2026**
(21) Numéro de dépôt: 25193533.4
(22) Date de dépôt: 01.08.2025
(51) Int. Cl.: B64D 33/08, B64D 27/34

(54) **ARCHITECTURE DE REFROIDISSEMENT POUR UN GROUPE MOTOPROPULSEUR CRYOGÉNIQUE ET SUPRACONDUCTEUR À LIGNES PARALLÈLES**

(30) Priorité: 29.08.2024 FR 2409209
(71) Demandeur: AIRBUS OPERATIONS (S.A.S.), 31060 Toulouse (FR)
(72) Inventeur: ROUQUETTE, Jean-François, 31700 BLAGNAC (FR); KHARCHE, Swapnil, 31700 BLAGNAC (FR); BOUKAYOUA, Souhaib, 31700 BLAGNAC (FR); YBANEZ, Ludovic, 31700 BLAGNAC (FR); TASSISTO, Matteo, 31700 BLAGNAC (FR)
(74) Mandataire: Airbus-OPS SAS

(57) **Abrégé**

La présente invention se rapporte à groupe motopropulseur cryogénique et supraconducteur comprenant au moins un moteur électrique supraconducteur (12) et une architecture de refroidissement comportant un échangeur de chaleur (36) configuré pour échanger de la chaleur entre un premier fluide et un deuxième fluide, le deuxième fluide suivant au moins une boucle de refroidissement (102) de composants (12, 14, 20, 24) en commençant par le moteur, la boucle de refroidissement (102) comprenant deux lignes parallèles de refroidissement entre le moteur (12) et l'échangeur (36) :
- une ligne de refroidissement (102a) d'unités de commande ;
- une ligne de refroidissement (102b) en série des câbles DCc (20) et amenées de courant (24) ;
les deux lignes(102a) et (102b) provenant du moteur (12) et se rejoignant en une seule ligne vers l'échangeur (36).

## Description

La présente invention concerne un groupe motopropulseur cryogénique et supraconducteur présentant une architecture de refroidissement.

Les architectures de refroidissement actuelles pour un groupe motopropulseur cryogénique et supraconducteur reposent sur des cryo-refroidisseurs industriels spécialement conçus pour les applications au sol. Les cryo-refroidisseurs conçus pour les applications au sol ne peuvent pas être utilisés pour les applications aéronautiques, car ils ne disposent pas des capacités de refroidissement nécessaires pour les applications aéronautiques. En outre, il existe également des préoccupations majeures liées au poids et à l'efficacité de ces refroidisseurs cryogéniques destinés aux applications aéronautiques.

En revanche, l'hydrogène liquide (LH2) disponible à bord peut être utilisé pour refroidir les composants du groupe motopropulseur. Cependant, pour des raisons de sécurité, dans les applications aéronautiques, l'hydrogène liquide n'est pas destiné à une utilisation directe (c'est-à-dire au refroidissement direct de composants électriques). De plus, la quantité d'hydrogène liquide stockée dans un réservoir pour un système de pile à combustible pour une phase de vol donnée est limitée et, en général, pilotée par les besoins de la pile à combustible elle-même.

Une optimisation de l'architecture de refroidissement est donc nécessaire afin d'optimiser la consommation d'hydrogène liquide et pour répondre aux besoins de refroidissement du groupe motopropulseur avec le débit d'hydrogène liquide disponible dans une phase de vol donnée.

Un groupe motopropulseur cryogénique et supraconducteur actuel comprend :
- Un moteur supraconducteur ;
- Une unité de commande de moteur (MCU), conçue pour contrôler les aspects fonctionnels du moteur supraconducteur ;
- Une ligne à courant continu (DC) ;
- Des amenées de courant principaux (Ld) vers les piles à combustible, et
- Un convertisseur DC/DC conçu pour adapter les niveaux de tension entre la ligne DC et les câbles de courant principaux.

Les différents composants du groupe motopropulseur cryogénique et supraconducteur ont des besoins de refroidissement différents, à la fois en termes de température maximale autorisée et de gradient de température maximal autorisé à travers les composants eux-mêmes. De plus, les performances et l'efficacité du composant lui-même dépendent de la température.

La table ci-dessous résume ci-dessous la température maximale admissible et le gradient de température maximal admissible des composants du groupe motopropulseur cryogénique et supraconducteur.

**[Table 1]**

| **Composant du groupe motopropulseur cryogénique et supraconducteur** | **Température maximale admissible (Tmax)** | **Gradient de température maximal admissible** |
|---|---|---|
| Moteur supraconducteur | 40K | / |
| Unité de commande du moteur (MCU) | 120K | 20K |
| Ligne DC | 75K | / |
| Convertisseur DC/DC | 140K | 20K |
| Principales pistes actuelles | 150K | / |

D'après cette table, si le moteur supraconducteur est exposé à une température supérieure à 40K (son Tmax), un risque de quench (perte brutale de l'état supraconducteur) au sein du moteur supraconducteur apparaît. De plus, le rendement du moteur supraconducteur dépend de la température : le moteur supraconducteur a un meilleur rendement à température inférieure à sa température seuil Tmax (c'est-à-dire inférieur à 40K).

Le gradient de température maximum autorisé pour l'unité de commande MCU (ici 20K) ne doit pas être dépassé pour garantir son bon fonctionnement. De plus, l'efficacité de l'unité MCU dépend de la température : l'unité MCU a un meilleur rendement à une température inférieure à sa température seuil Tmax (c'est-à-dire inférieur à 120K).

Si la ligne DC est exposée à une température supérieure à sa température seuil 75K (son Tmax), un risque de quench apparaît au sein de la ligne DC.

Le gradient de température maximum autorisé du convertisseur DC/DC (ici 20K) ne doit pas être dépassé pour garantir le bon fonctionnement du convertisseur DC/DC. De plus, le rendement du convertisseur DC/DC dépend de la température : le convertisseur DC/DC a un meilleur rendement à une température inférieure à son Tmax (c'est-à-dire inférieur à 140K).

Le rendement des amenées de courant principales vers la pile à combustible dépend de la température : les amenées de courant principales ont un meilleur rendement à une température inférieure à leur température seuil Tmax (c'est-à-dire inférieur à 150K).

Par conséquent, tous les composants du groupe motopropulseur cryogénique n'ont pas les mêmes besoins de refroidissement et n'ont donc pas besoin d'être refroidis à la même température, puisque chaque composant n'a pas la même température maximale autorisée.

Ainsi, il existe un besoin pour un procédé et un système permettant de gérer la température de refroidissement de chaque composant du groupe motopropulseur cryogénique et supraconducteur.

A cet effet, il est proposé un groupe motopropulseur cryogénique et supraconducteur comprenant :
- au moins un moteur électrique supraconducteur (12),
- au moins une unité de commande de moteur (14) configurée pour contrôler les aspects de fonctionnement du moteur électrique supraconducteur (12),
- au moins un dispositif supraconducteur de distribution et de protection (20), appelés câbles (20),
- au moins une amenée de courant principale (24) vers la pile à combustible (22),
- une architecture de refroidissement (30) comprenant :
   - un réservoir d'un premier fluide (32) pour stocker ce fluide à température cryogénique,
   - un réservoir (35) de deuxième fluide ;
   - un échangeur de chaleur (36) configuré pour échanger de la chaleur entre le premier fluide et un deuxième fluide, le deuxième fluide suivant au moins une boucle de refroidissement (102) de composants (12, 14, 20, 24) en commençant par le moteur, la boucle de refroidissement (102) comprenant deux lignes parallèles de refroidissement entre le moteur (12) et l'échangeur (36) :
      - une ligne de refroidissement (102a) des unités de commande ;
      - une ligne de refroidissement (102b) en série des câbles DCc (20) et amenées de courant (24) ;
les deux lignes(102a) et (102b) provenant du moteur (12) et se rejoignant en une seule ligne vers l'échangeur (36).

L'invention prévoit au moins l'une des caractéristiques optionnelles suivantes, prises isolément ou en combinaison.

Le premier fluide comprend de l'hydrogène liquide (LH2) et le second fluide comprend de l'hélium gazeux (GHe).

L'architecture de refroidissement comprend une boucle de réchauffement primaire pour le premier fluide de manière à le réchauffer pour être utilisé par une pile à combustible et une boucle de refroidissement secondaire pour le deuxième fluide de manière à le refroidir pour refroidir l'ensemble desdits composants.

La boucle de refroidissement secondaire est agencée et configurée pour refroidir des composants du groupe motopropulseur cryogénique et supraconducteur.

La boucle de refroidissement secondaire est refroidie par le flux de deuxième fluide, et en retour chauffe le premier fluide qui entre dans la pile à combustible.

Le groupe motopropulseur comprend en outre :
- au moins un ventilateur de recirculation cryogénique pour faire recirculer le deuxième fluide dans les composants cryogéniques et supraconducteurs du groupe motopropulseur en boucle fermée complète, et
- des conduites isolées cryogéniques afin d'acheminer le fluide cryogénique jusqu'aux composants électriques du groupe motopropulseur cryogénique et supraconducteur.

L'architecture de refroidissement comprend une ligne de refroidissement supplémentaire prévue pour conduire le flux de deuxième fluide en amont de l'échangeur, à savoir non refroidi par celui-ci, vers l'entrée des unités de commande MCUs.

L'architecture de refroidissement comprend une ligne de refroidissement locale supplémentaire prévue pour conduire le flux de deuxième fluide en aval des unités de commande vers l'entrée desdites unités de commande.

L'architecture de refroidissement comprend un deuxième ventilateur permettant d'entraîner le flux en aval des unités de commande vers l'entrée de celles-ci.

La présente invention concerne également un aéronef comportant un groupe motopropulseur présentant au moins l'une des caractéristiques optionnelles suivantes, prises isolément ou en combinaison présentées ci-dessus, dans lequel les réservoirs et l'échangeur se trouvent dans le fuselage de l'aéronef et des composants de l'architecture de refroidissement se trouvent dans un pod dans une nacelle.

D'autres buts, caractéristiques et avantages ressortiront de la description de l'invention qui va suivre, description donnée à titre d'exemple uniquement non limitatif, en référence aux dessins ci-annexés dans lesquels :
[Fig. 1] illustre de manière simplifiée en perspective une architecture de refroidissement pour un groupe motopropulseur cryogénique et supraconducteur fonctionnant à température cryogénique selon un mode de réalisation de l'invention ;
[Fig. 2] illustre schématiquement une architecture de refroidissement d'un groupe motopropulseur cryogénique et supraconducteur fonctionnant à température cryogénique selon un mode de réalisation de l'invention ;
[Fig. 3] illustre schématiquement une architecture de refroidissement d'un groupe motopropulseur cryogénique et supraconducteur fonctionnant à température cryogénique selon un autre mode de réalisation de l'invention ;
[Fig. 4] illustre schématiquement une architecture de refroidissement d'un groupe motopropulseur cryogénique et supraconducteur fonctionnant à température cryogénique selon un autre mode de réalisation de l'invention;
[Fig. 5] illustre schématiquement un aéronef pourvu d'une architecture selon la présente invention.

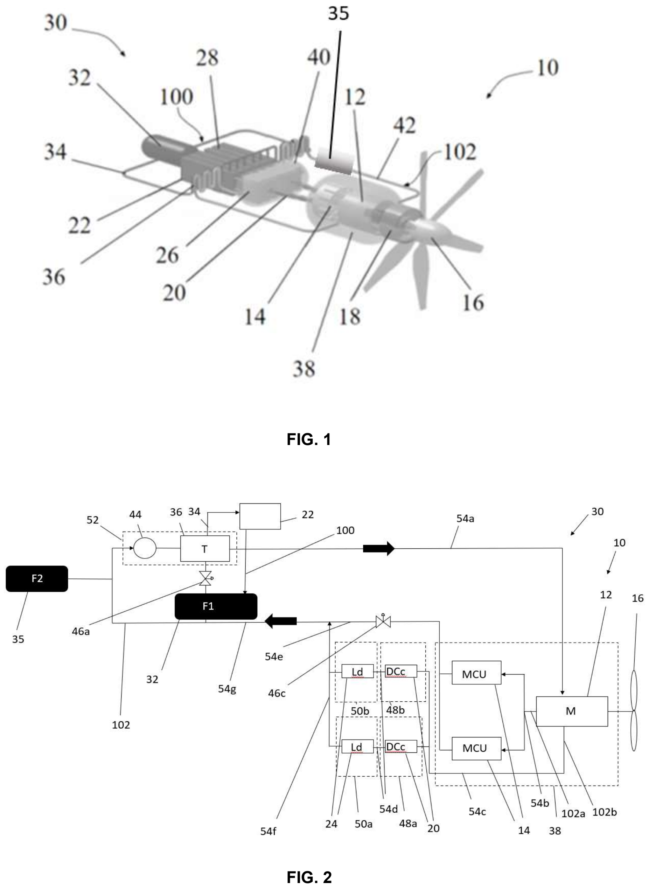

La figure 1 représente de manière générale et simplifiée une architecture 30 de refroidissement pour un groupe motopropulseur cryogénique et supraconducteur fonctionnant à température cryogénique.

Le groupe motopropulseur cryogénique et supraconducteur 10 comprend :
- un moteur électrique supraconducteur 12, comprenant un arbre moteur,
- des unités de commande de moteur MCU 14, appelée également unités de contrôle, configurée pour contrôler tous les aspects de fonctionnement du moteur électrique supraconducteur 12,
- des dispositifs supraconducteurs de distribution et de protection 20, encore appelés câbles DCc 20 ou lignes DCc 20,
- au moins une pile à combustible 22, qui dans cette architecture est utilisée comme source d'alimentation en courant continu,
- des amenées de courant 24 vers la pile à combustible 22 (la figure 1 étant très simplifiée pour faire comprendre l'architecture globale, ils n'apparaissent pas dans la figure 1 mais sont illustrés sur les figures 2 à 4),
- un système de gestion de chaleur 28 de la pile à combustible qui ne sera pas plus décrit dans ce qui suit car ne faisant pas partie de l'innovation proprement dite.

Une hélice 16 peut être entraînée par le moteur 12 directement ou indirectement à savoir par l'intermédiaire d'une transmission, d'un système d'embrayage ou de tout autre système nécessaire.

Des convertisseurs DC/DC utilisés pour adapter les niveaux de tension entre les câbles DCc 20 et les amenées de courant 24 présentent un certain poids. Par ailleurs, ils ont une dissipation plus grande que les autres composants, la montée en température du GHe étant plus importante au travers de ces convertisseurs que dans les autres composants (exception faite de des unités de commande MCU 14).

Or le groupe motopropulseur peut tout à fait fonctionner sans convertisseur : il suffit de jouer sur la longueur des amenées de courant 24 ainsi que sur la source d'énergie (les piles combustibles 22) pour adapter les niveaux de tension et permettre la liaison directe entre les câbles DCc et les amenées de courant 24. Par conséquent, la présente architecture ne présente pas de convertisseurs.

Comme montré sur les figures 1 à 4, l'architecture de refroidissement 30 comprend :
- un réservoir 32 d'un premier fluide F1 ici de l'hydrogène liquide LH₂ pour stockage à température cryogénique,
- des canalisations de circulation de premier fluide (ici le LH₂) 34 commençant au réservoir 32,
- un réservoir 35 d'un deuxième fluide F2 ici d'hélium gazeux GHe à température ambiante ;
- un unique échangeur de chaleur 36 entre le premier fluide F1 (ici LH₂) et le deuxième fluide F2 (ici GHe),
- au moins un cryostat 38 de deuxième fluide pour refroidir séparément ou ensemble le MCU 14 et le moteur électrique supraconducteur 12,
- des conduites de circulation de deuxième fluide ici le GHe 42 entre l'échangeur de chaleur 36 et ledit cryostat 38.

L'architecture de refroidissement 30 comprend une boucle de réchauffement 100 primaire utilisant le premier fluide LH2 et une boucle de refroidissement secondaire 102 utilisant le deuxième fluide GHe. Les deux boucles ont une partie commune au niveau de l'échangeur 36 au niveau duquel le premier fluide refroidit le deuxième fluide et de ce fait, se réchauffe. La boucle de réchauffement 100 utilisant le premier fluide est agencée et configurée pour réchauffer le premier fluide à savoir ici l'hydrogène à température cryogénique en sortie de réservoir 32 de manière à être à une température lui permettant d'être utilisé par la pile 22 à combustible. Si le réchauffage par le deuxième fluide est insuffisant, il est possible de prévoir un dispositif complémentaire de réchauffage tel que par exemple un dispositif de type électrique ou encore en utilisant un autre échangeur thermique avec un troisième fluide comme par exemple de l'eau glycolée. La boucle de refroidissement secondaire 102 est agencée et configurée pour refroidir le deuxième fluide pour refroidir les composants du groupe motopropulseur. La boucle de refroidissement secondaire 102 est refroidie par le flux de premier fluide LH2, et en retour chauffe celui-ci qui peut ainsi entrer ensuite dans la pile à combustible 22.

Comme représenté sur la figure 1, l'architecture de refroidissement 30 comprend un échangeur de chaleur 36 pour transférer de la chaleur du premier fluide au deuxième fluide à savoir dans la description qui suit, de manière non limitative, de l'hélium gazeux (GHe) à de l'hydrogène liquide (LH2). Le deuxième fluide de l'échangeur thermique 36 peut être un autre fluide inerte que l'hélium, par exemple du néon liquide ou de l'azote liquide (N2). De préférence, l'hélium gazeux est utilisé dans la boucle de refroidissement secondaire 102 car il est moins cher que le Néon, et c'est un élément inerte, réduisant considérablement le risque de sécurité par rapport à l'hydrogène, et est léger. De plus, l'hélium est le seul élément ayant un point d'ébullition inférieur à l'hydrogène ; il sera donc dans sa phase gazeuse dans tous les scénarios avion possibles. L'hélium est stocké dans le réservoir 35 qui permet de maintenir la pression dans la boucle 102 quasiment constante quel que soit la température de l'hélium.

Comme représentée sur les figures 2 à 4, l'architecture de refroidissement 30 comprend également :
- au moins un ventilateur de recirculation cryogénique 44 (44a, 44b) afin de faire recirculer le liquide de refroidissement à l'hélium dans des composants du groupe motopropulseur différents suivant les formes de réalisation qui seront décrites ci-après ;
- des conduites cryogéniques isolées 54a-j afin d'acheminer le fluide cryogénique entre différents composants de l'architecture.

Plusieurs formes de réalisation sont dans ce qui suit décrites. Dans toutes ces formes de réalisation, l'architecture de refroidissement 30 du groupe motopropulseur cryogénique 10 est présentée pour un seul moteur supraconducteur 12 à deux canaux séparés. Une configuration à canal unique fait référence au groupe motopropulseur cryogénique 10 avec un moteur électrique supraconducteur 12 couplé à une seule unité de commande de moteur 14 (MCU), un câble à courant continu DCc 20 et des amenées de courant 24 Ld vers la pile à combustible 22. Ici, deux canaux sont utilisés afin d'omettre la dépendance électrique sur un seul canal. Ainsi, même en cas de panne d'un seul canal électrique, le groupe motopropulseur 10 serait capable de fonctionner, en mode dégradé.

Dans toutes les formes de réalisation également, un seul échangeur de chaleur 36 est disposé pour transférer la chaleur entre l'hydrogène et l'hélium.

Une contrainte majeure est la température d'entrée du moteur supraconducteur 12, qui doit être maintenue aussi basse que possible. Compte tenu du débit du deuxième fluide, à savoir ici d'hélium, entrant dans le groupe motopropulseur et connaissant la dissipation de chaque composant du groupe motopropulseur 10, la température en chaque point de l'architecture de refroidissement 30 est calculée en conséquence.

Selon l'invention, le deuxième fluide ici GHe stocké dans un réservoir 35 sous pression est utilisé comme source de refroidissement. Un fluide d'hélium gazeux (GHe) est utilisé en circuit fermé selon la boucle 102 de refroidissement secondaire pour refroidir les composants électriques du groupe motopropulseur cryogénique et supraconducteur 10. Le débit d'hélium GHe dans le circuit fermé est régulé par le ventilateur cryogénique 44.

Une quantité prédéterminée de deuxième fluide F2 est refroidie à une température prédéterminée, à l'aide du premier fluide F1, avant d'être injectée dans le groupe motopropulseur supraconducteur. moteur 12 du groupe motopropulseur 10. Par exemple, l'hélium (He) est refroidi par l'hydrogène (H2). Le débit de second fluide à refroidir circulant depuis l'échangeur thermique 36 vers le moteur supraconducteur 12 est calculé en fonction des contraintes provenant du groupe motopropulseur.

Le deuxième fluide à savoir l'hélium, préalablement refroidi par l'hydrogène, est réchauffé par la chaleur dissipée du moteur supraconducteur 12, permettant au moteur supraconducteur 12 de rester à une température de fonctionnement inférieure à un seuil maximum de température (au-delà duquel le moteur peut ne plus fonctionner correctement). Le même principe s'applique à tous les composants du groupe motopropulseur.

La boucle de refroidissement secondaire 102 comprend en aval du moteur deux lignes de refroidissement parallèles 102a et 102b. Le flux de deuxième fluide ayant refroidi le moteur se divise en deux flux suivant les deux lignes 102a, 102b parallèles de refroidissement entre le moteur et l'échangeur :
- une ligne de refroidissement 102a des unités de commande ;
- une ligne de refroidissement 102b en série des câbles DCc et amenées de courants Ld ;
les deux lignes de refroidissement 102a, 102b se rejoignant ensuite en aval des unités 14 de commande, des câbles 20, des amenées de courant 24 en une seule ligne vers l'échangeur pour former la boucle 102.

L'architecture comprend de manière plus précise :
- une conduite cryogénique 54a entre l'échangeur et le moteur, la conduite étant dite cryogénique car susceptible de transporter un fluide à température cryogénique et de le maintenir à cette température ;
- une conduite cryogénique 54b entre le moteur et les unités de commande ;
- une conduite cryogénique 54c entre le moteur et les câbles DCc ;
- une conduite cryogénique 54d entre les câbles DCc et les amenées de courant;
- une conduite cryogénique 54e entre les unités de commande et l'échangeur ;
- une conduite cryogénique 54f entre les amenées de courant et l'échangeur, les conduites cryogéniques 54e et 54f se retrouvant dans une seule et même conduite 54g pour le retour vers l'échangeur.

Ainsi le fluide de refroidissement refroidit le moteur et se divise ensuite en deux flux l'un destiné au refroidissement des unités de commande et l'autre destiné au refroidissement des câbles DCc et en série des amenées de courant. Les deux flux créent deux lignes de refroidissement indépendantes permettant de protéger les câbles DCc du flux sortant des unités de commande dont la dissipation comme vu précédemment est plus importante. Il est ainsi proposé une alternative sous la forme d'une ségrégation évitant un refroidissement en série de l'ensemble des composants proposé dans d'autres types d'architecture.

Le débit de deuxième fluide GHe dans le circuit fermé est régulé par le ventilateur cryogénique 44 placé sur la boucle de refroidissement 102 en amont de l'échangeur 36.

Le deuxième fluide F2 (GHe) est refroidi à une certaine température par le premier fluide F1 (LH₂). Le deuxième fluide F2 (GHe) sortant du moteur supraconducteur 12 est utilisé pour refroidir les câbles DCc 20 et les amenées de courant (Ld) vers la pile à combustible 22 (comme représenté sur les figures 2 à 4).

Le deuxième fluide F2 (GHe) froid est également utilisé en sortie du moteur pour maintenir les unités de commande du moteur 14 (MCU) à la température froide requise. Le deuxième fluide F2 (GHe) chaud provenant des conduites 24 et des unités de commande 14 est ensuite renvoyé vers l'échangeur de chaleur 36 via la conduite de retour 54g à l'aide du ventilateur 44.

Ainsi aucun des composants du groupe motopropulseur n'est soumis à une température supérieure à sa température maximale autorisée.

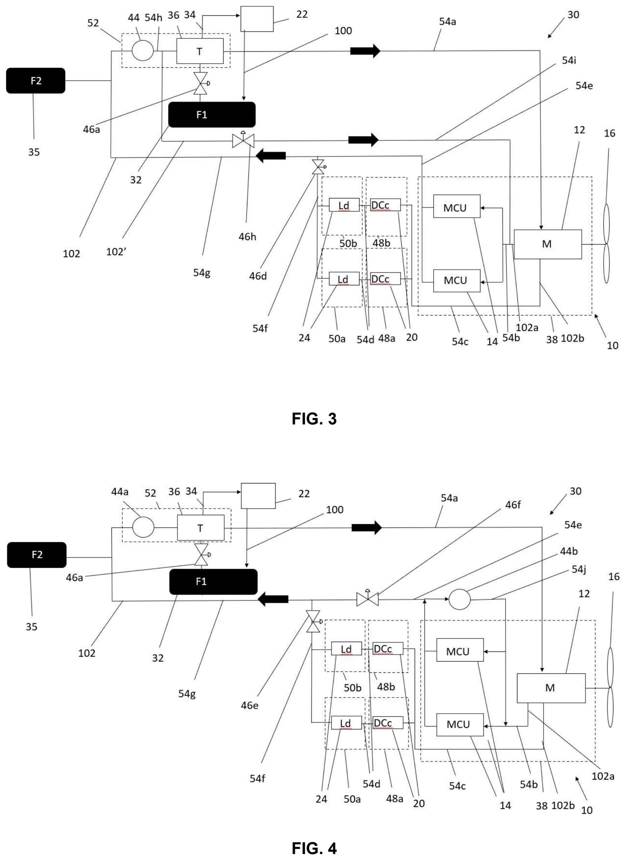

Cette architecture de refroidissement 30 comprend des vannes de commande 46 (par exemple des vannes de commande à distance). Par exemple, sur les figures 2, 3 et 4, une vanne 46a est disposée sur chaque conduite 34 de premier fluide (LH2) vers l'échangeur thermique 36, et des vannes additionnelles sont également disposées sur des conduites isolées cryogéniques différentes suivant les formes de réalisation : la vanne 46c sur la conduite 54e sur la forme de réalisation des figure 2 et 4, la vanne 46d sur la conduite 54f sur la forme de réalisation de la figure 3, les vannes 46e et 46f respectivement sur les conduites 54f et 54e sur la forme de réalisation de la figure 4. Le fonctionnement des vannes n'est pas détaillé ici et leur positionnement dans l'architecture peut être différent. D'autres vannes peuvent également être ajoutées ou retirées.

Dans toutes les formes illustrées sur les figures 2, 3 et 4, les carrés en pointillés indiquent un cryostat dédié aux composants respectifs qui doivent être maintenus à basse température. Comme mentionné précédemment, le moteur supraconducteur 12 et les MCU sont disposés dans le même cryostat 38. Cependant, il est possible de prévoir un ou des cryostats distincts pour le moteur et les MCUs. Chaque dispositif supraconducteur de distribution et de protection 20 est disposé dans un cryostat dédié 48a, 48b. De la même façon, il pourrait être prévu un ou plusieurs cryostats pour l'ensemble ou groupes de dispositifs 20. Les amenées de courant de courant 24 sont disposées dans un cryostat propre 50a, 50b. Plus précisément, comme représenté sur la figure 2, les amenées de courant 24 du groupe motopropulseur 10 sont divisées en deux lignes électriques, chaque ligne électrique des amenées de courant 24 est disposée dans un cryostat dédié 50a, 50b. Là encore, il pourrait être prévu un ou plusieurs cryostats pour l'ensemble ou groupes d'amenées de courant 24. Il est également possible de prévoir chaque amenée de courant dans un même cryostat que son câble respectif (à savoir celui auquel elle est liée) et non plus des cryostats distincts pour les amenées et les câbles. Dans ce cas, de la même façon que précédemment, il pourrait également être prévu un ou plusieurs cryostats pour l'ensemble ou groupes d'amenées avec leurs câbles respectifs. Le ventilateur cryogénique 44 et l'échangeur thermique 36 peuvent également être disposés dans un cryostat commun 52 ou dédié. Selon une forme de réalisation possible, l'échangeur de chaleur 36 est disposé dans un cryostat 52, à proximité du réservoir 32 de premier fluide pour distribuer l'hydrogène sous forme liquide sur une distance la plus courte possible. Généralement, ce cryostat 52 et la pile à combustible 22 sont disposés à proximité l'un de l'autre.

Avec l'architecture de refroidissement 30 ci-dessus, diverses configurations du groupe motopropulseur cryogénique et supraconducteur 10 sont possibles.

La figure 2 représente une première architecture de refroidissement 30 d'un groupe motopropulseur cryogénique et supraconducteur 10 dans laquelle les composants du groupe motopropulseur 10 sont refroidis à l'aide d'une seule boucle de refroidissement 102 du deuxième fluide refroidi par l'échangeur 36. Dans les formes de réalisation décrites ensuite, plusieurs boucles de refroidissement sont proposées sachant que, comme vu précédemment, la ou l'une des boucles de refroidissement 102 se divise en deux boucles de refroidissement 102a et 102b.

Selon ce mode de réalisation de l'invention, aucune spécificité n'est ajoutée à la description de l'architecture globale faite dans ce qui précède. Dans l'architecture de refroidissement 30 du groupe motopropulseur cryogénique et supraconducteur 10 représenté sur la figure 2, le deuxième fluide est refroidi à une température prédéterminée, à l'aide du premier fluide dans l'échangeur 36, avant d'être injecté dans le groupe motopropulseur supraconducteur. Le flux de deuxième fluide réchauffé par le moteur sortant de celui-ci se divise en deux flux en parallèle l'un destiné au refroidissement des unités 14 et l'autre destiné au refroidissement des câbles 20 et amenées de courant 24 en série. Les flux de second fluide sortant des unités 14 et se rejoignant dans une conduite 54e et les flux de second fluide sortant des amenées de courant 24 et se rejoignant dans une conduite 54f se rejoignent dans une même conduite 54g pour traverser à nouveau l'échangeur 36 entrainés par le ventilateur 44 et former la boucle 102.

La figure 3 représente une deuxième forme de réalisation de l'architecture de refroidissement 30 d'un groupe motopropulseur cryogénique et supraconducteur 10 dans laquelle les composants du groupe motopropulseur 10 sont refroidis à l'aide de deux boucles de refroidissement 102, 102' du deuxième fluide, l'une 102 dans laquelle le deuxième fluide F2 est refroidi par l'échangeur 36, l'autre 102' dans laquelle le deuxième fluide F2 n'est pas refroidi par l'échangeur.

La deuxième boucle de refroidissement 102' lie la conduite cryogénique 54h en amont de l'échangeur 36 (la conduite 54h se trouvant plus précisément entre le ventilateur 44 et l'échangeur 36) à la sortie du moteur 12 au niveau de la conduite 54b qui lie le moteur aux MCU 14. Plus précisément dans la forme illustrée, elle lie le ventilateur 44 à ladite sortie du moteur par une conduite 54i. Le flux de deuxième fluide GHe sortant du moteur supraconducteur 12 est mélangé au flux de deuxième fluide GHe provenant du ventilateur 44 avant d'entrer dans les MCU 14. Le flux ainsi créé entre dans les MCUs 14 et est réchauffé par les MCUs 14, en raison de la dissipation du MCU 14. Ensuite, le deuxième fluide GHe suit la conduite 54g et passe dans le ventilateur cryogénique 44 pour être à nouveau entrainé dans deux boucles 102 et 102', l'une dans l'échangeur thermique 36 pour être refroidi grâce au premier fluide LH₂, à une certaine température et l'autre vers la sortie du moteur liée aux MCUs sans être refroidi par l'échangeur.

Du fait d'une boucle supplémentaire 102' de refroidissement, cette forme de réalisation d'architecture de refroidissement 30 comprend une vanne de télécommande 46 supplémentaire 46h pour réguler le débit arrivant directement en entrée des unités MCU. La vanne 46h est disposée sur le conduit 54i. Ainsi la vanne 46c disposée sur la conduite 54e dans la première forme de réalisation n'est plus nécessaire. Elle est déplacée sur la conduite 54i. En dehors de cette boucle supplémentaire 102' et des vannes de télécommande supplémentaires ou placée différemment, tout le reste de l'architecture est équivalent à la première forme de réalisation illustrée sur la figure 2.

La figure 4 représente une troisième forme de réalisation de l'architecture 30 identique à celle de la figure 2 dans laquelle une boucle de refroidissement locale 102 est créée en plus par rapport à cette architecture au niveau des unités de commande MCU 14. La conduite 54b en sortie du moteur et la conduite 54e en sortie des unités MCUs sont connectées par une conduite supplémentaire 54j pour former une boucle locale de refroidissement des unités de commande MCUs: un ventilateur de recirculation cryogénique 44, référencé 44b (par rapport au ventilateur en amont de l'échangeur référencé 44a), est introduit dans cette boucle au niveau de la conduite 54j pour entraîner le flux de deuxième fluide GHe sortant des MCUs partiellement à nouveau vers les unités MCUs. Comme vu précédemment, les unités de commande MCU présentent une dissipation plus importante que les autres composants. Une boucle locale supplémentaire permet de pallier cette différence avec les autres composants. Comme indiqué par le sens des flèches sur la figure 4, le deuxième fluide en sortie du moteur est entraîné vers les unités de commande 14 et en sortie des unités de commande 14, partiellement à nouveau vers les entrées de celles-ci à l'aide du ventilateur 44 et partiellement vers l'échangeur 36. Une vanne 46e est ajoutée en sortie des amenées de courant 24 au niveau de la conduite 54f. sachant qu'une vanne 46f est prévue au niveau de la conduite 54e.

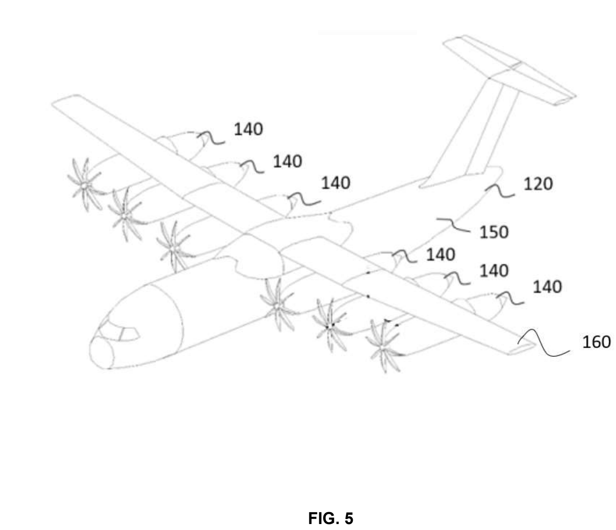

La figure 5 représente un exemple d'aéronef 120 à propulsion à hydrogène pourvu d'une telle architecture de refroidissement. Des composants du groupe motopropulseur décrit précédemment en particulier les unités de commande 14, les câbles 20 et amenées 24 sont positionnés dans une boîte, dite boite à hydrogène, appelée pod, installée dans une nacelle 140 de l'aéronef. Les réservoirs 32, 35, l'échangeur 36 et le ventilateur 44a sont positionnés dans le fuselage 150 ou l'aile 160.

Les systèmes et dispositifs décrits ici peuvent comprendre un contrôleur ou un dispositif informatique comprenant un traitement et une mémoire dans laquelle sont stockées des instructions exécutables par ordinateur pour mettre en œuvre les processus décrits ici. L'unité de traitement peut comprendre n'importe quel dispositif approprié configuré pour provoquer l'exécution d'une série d'étapes de manière à mettre en œuvre le procédé de telle sorte que les instructions, lorsqu'elles sont exécutées par le dispositif informatique ou un autre appareil programmable, puissent provoquer les fonctions/actes/étapes spécifiés dans les méthodes décrites ici à exécuter. L'unité de traitement peut comprendre, par exemple, tout type de microprocesseur ou microcontrôleur à usage général, un processeur de traitement du signal numérique (DSP), une unité centrale de traitement (CPU), un circuit intégré, un réseau de portes programmables par l'utilisateur (FPGA), un processeur reconfigurable, autres circuits logiques convenablement programmés ou programmables, ou toute combinaison de ceux-ci.

La mémoire peut être n'importe quel support de stockage connu ou autre support de stockage lisible par machine. La mémoire peut comprendre un support de stockage non transitoire lisible par ordinateur tel que, par exemple, mais sans s'y limiter, un système, un appareil ou un dispositif électronique, magnétique, optique, électromagnétique, infrarouge ou semi-conducteur, ou toute combinaison appropriée de ce qui précède. La mémoire peut comprendre une combinaison appropriée de tout type de mémoire informatique située soit à l'intérieur soit à l'extérieur du dispositif, telle que, par exemple, une mémoire vive (RAM), une mémoire morte (ROM), un disque compact en lecture seule. mémoire (CDROM), mémoire électro-optique, mémoire magnéto-optique, mémoire morte programmable effaçable (EPROM) et mémoire morte programmable effaçable électriquement (EEPROM), RAM ferroélectrique (FRAM) ou similaire. La mémoire peut comprendre n'importe quel moyen de stockage (par exemple, des dispositifs) approprié pour stocker de manière récupérable les instructions exécutables par ordinateur exécutables par l'unité de traitement.

Les procédés et systèmes décrits ici peuvent être mis en œuvre dans un langage de programmation ou de script procédural ou orienté objet de haut niveau, ou une combinaison de ceux-ci, pour communiquer avec ou aider au fonctionnement du contrôleur ou du dispositif informatique. Alternativement, les procédés et systèmes décrits ici peuvent être implémentés en langage assembleur ou machine. Le langage peut être un langage compilé ou interprété. Le code de programme pour mettre en œuvre les procédés et systèmes décrits ici peut être stocké sur le support de stockage ou le dispositif, par exemple une ROM, un disque magnétique, un disque optique, une clé USB ou tout autre support ou dispositif de stockage approprié. Le code de programme peut être lisible par un ordinateur programmable général ou spécialisé pour configurer et faire fonctionner l'ordinateur lorsque le support ou le dispositif de stockage est lu par l'ordinateur pour exécuter les procédures décrites ici.

Les instructions exécutables par ordinateur peuvent se présenter sous de nombreuses formes, y compris des modules, exécutés par un ou plusieurs ordinateurs ou autres dispositifs. Généralement, les modules incluent des routines, des programmes, des objets, des composants, des structures de données, etc., qui effectuent des tâches particulières ou implémentent des types de données abstraits particuliers. Généralement, les fonctionnalités des modules peuvent être combinées ou distribuées comme souhaité dans divers modes de réalisation.

Bien qu'au moins un exemple de mode de réalisation de la ou des présentes inventions soit divulgué ici, il convient de comprendre que des modifications, substitutions et alternatives peuvent être apparentes à l'homme du métier et peuvent être apportées sans sortir de la portée de cette divulgation. Cette divulgation est destinée à couvrir toutes adaptations ou variations du ou des exemples de mode de réalisation. De plus, dans cette description, les termes « comprendre » ou « comprenant » n'excluent pas d'autres éléments ou étapes, les termes « un » ou « un » n'excluent pas un nombre pluriel, et le terme « ou » signifie l'un ou les deux. En outre, les caractéristiques ou étapes qui ont été décrites peuvent également être utilisées en combinaison avec d'autres caractéristiques ou étapes et dans n'importe quel ordre, sauf si la divulgation ou le contexte suggère le contraire. Cette divulgation incorpore par référence la divulgation complète de tout brevet ou application dont elle revendique un bénéfice ou une priorité.

## Revendications

1. Groupe motopropulseur cryogénique et supraconducteur comprenant :
- au moins un moteur électrique supraconducteur (12),
- au moins une unité de commande de moteur (14) MCU configurée pour contrôler les aspects de fonctionnement du moteur électrique supraconducteur (12),
- au moins un dispositif supraconducteur de distribution et de protection (20), appelé câble DCc (20) ;
- au moins une amenée de courant principale (24) vers une pile à combustible (22),
- une architecture de refroidissement (30) comprenant :
- un réservoir d'un premier fluide (32) pour stocker ledit premier fluide à température cryogénique,
- un réservoir (35) de deuxième fluide ;
- un échangeur de chaleur (36) configuré pour échanger de la chaleur entre le premier fluide et un deuxième fluide, le deuxième fluide suivant au moins une boucle de refroidissement (102) de composants (12, 14, 20, 24) en commençant par le moteur (12), **caractérisé en ce que** la boucle de refroidissement (102) comprend deux lignes parallèles de refroidissement entre le moteur (12) et l'échangeur (36) :
- une ligne de refroidissement (102a) des unités de commande (14);
- une ligne de refroidissement (102b) en série des câbles DCc (20) et amenées de courant (24) ;
les deux lignes(102a) et (102b) provenant du moteur (12) et se rejoignant en une seule ligne vers l'échangeur (36).

2. Groupe motopropulseur cryogénique et supraconducteur (10) selon la revendication 1, dans lequel le premier fluide comprend de l'hydrogène liquide (LH2) et le second fluide comprend de l'hélium gazeux (GHe).

3. Groupe motopropulseur cryogénique et supraconducteur (10) selon l'une quelconque des revendications précédentes, dans lequel l'architecture de refroidissement (30) comprend une boucle de réchauffement primaire (100) pour le premier fluide de manière à le réchauffer pour être utilisé par une pile à combustible (22) et une boucle de refroidissement secondaire (102) pour le deuxième fluide de manière à le refroidir pour refroidir l'ensemble desdits composants (12, 14, 20, 24).

4. Groupe motopropulseur cryogénique et supraconducteur (10) selon la revendication précédente, dans lequel la boucle de refroidissement secondaire (102) est agencée et configurée pour refroidir des composants (12, 14, 20, 24) du groupe motopropulseur cryogénique et supraconducteur.

5. Groupe motopropulseur cryogénique et supraconducteur (10) selon la revendication précédente, dans lequel la boucle de refroidissement secondaire (102) est refroidie par le flux de deuxième fluide, et en retour chauffe le premier fluide qui entre dans la pile à combustible (22).

6. Groupe motopropulseur cryogénique et supraconducteur (10) selon l'une quelconque des revendications précédentes, comprenant en outre :
- au moins un ventilateur de recirculation cryogénique (44a, 44b) pour faire recirculer le deuxième fluide dans les composants cryogéniques et supraconducteurs du groupe motopropulseur en boucle fermée complète, et
- des conduites isolées cryogéniques (54a-j), afin d'acheminer le fluide cryogénique jusqu'aux composants électriques du groupe motopropulseur cryogénique et supraconducteur (10).

7. Groupe motopropulseur cryogénique et supraconducteur (10) selon l'une quelconque des revendications précédentes, dans lequel l'architecture de refroidissement (30) comprend une ligne de refroidissement (102') supplémentaire prévue pour conduire le flux de deuxième fluide en amont de l'échangeur à savoir non refroidi par celui-ci, vers l'entrée des unités de commande MCU (14).

8. Groupe motopropulseur cryogénique et supraconducteur (10) selon l'une des revendications 1 à 6, dans lequel l'architecture de refroidissement (30) comprend une ligne de refroidissement (102") locale supplémentaire prévue pour conduire le flux de deuxième fluide en aval des unités (14) vers l'entrée dites unités de commande.

9. Groupe motopropulseur cryogénique et supraconducteur (10) selon la revendication précédente, dans lequel l'architecture de refroidissement (30) comprend un deuxième ventilateur (44b) permettant d'entraîner le flux en aval des unités (14) vers l'entrée desdites unités de commande.

10. Aéronef comprenant un groupe motopropulseur selon l'une des revendications précédentes, dans lequel les réservoirs (32, 35) et l'échangeur (36) se trouvent dans le fuselage de l'aéronef et des composants de l'architecture de refroidissement (30) se trouvent dans un pod dans une nacelle (140).
